# DEMANDE DE BREVET EUROPEEN

(11) **EP 0 581 672 A1**
(43) Date de publication de la demande: **02.02.1994**
(21) Numéro de dépôt: 93401951.4
(22) Date de dépôt: 27.07.1993
(51) Int. Cl.: B60S 1/52, B62D 65/00

(54) **Dispositif de lavage d'une glace de projecteur de véhicule automobile,vérin pour un tel dispositif et procédé de montage d'un tel dispositif**

(30) Priorité: 28.07.1992 FR 9209296
(71) Demandeur: VALEO VISION, 93000 Bobigny (FR)
(72) Inventeur: Vraux Didier, F-93130 Noisy Le Sec (FR)
(74) Mandataire: Ahner, Francis

(57) **Abrégé**

Un dispositif de lavage d'une glace de projecteur (G) de véhicule automobile comprend un vérin (7,8) dont une tige coulissante (7) forme un conduit pour un liquide de lavage et peut être amenée dans une position sortie par la pression dudit liquide, un porte-gicleur (3) monté à l'extrémité de la tige (7a), et un moyen de rappel élastique de ladite tige (7) dans une position rentrée. Le vérin (7,8) doit être monté sur le véhicule par un premier côté d'une paroi telle que celle d'un pare-chocs (PC), et le porte-gicleur (3) doit être monté sur la tige (7), traversant ladite paroi, par l'autre côté. La force du moyen de rappel élastique est également utilisée pour plaquer fermement une région extérieure du porte-gicleur (3) contre une région avoisinante (13,13a) de la paroi.

Selon l'invention, la tige (7) présente dans la région de son extrémité libre un aménagement (10) pour le montage provisoire d'un moyen de retenue (11) qui, en coopérant avec une partie fixe, permet de maintenir la tige (7) dans une position partiellement sortie autorisant le montage du porte-gicleur (3).

## Description

La présente invention concerne d'une façon générale les dispositifs de lavage des glaces de projecteurs de véhicules automobiles.

Classiquement, un tel dispositif de lavage comprend une ou plusieurs buses ou gicleurs alimentés en liquide de lavage sous pression et disposés de façon fixe à une certaine distance en avant et au-dessous de la glace du projecteur. Ainsi, on incorpore habituellement ces gicleurs dans le bouclier ou pare-chocs avant du véhicule.

Il est bien connu parailleurs que, pourobtenir une efficacité de lavage maximale, le gicleur doit être situé aussi loin que possible en avant de la glace du projecteur, de manière à ce que les goutteletes de liquide frappent la glace avec un angle d'incidence aussi élevé que possible par rapport au plan de ladite glace.

L'inclinaison des glaces de projecteurs modernes, qui doivent épouser la forme plongeante de l'avant des véhicules, nécessite un éloignement des gicleurs vers l'avant encore plus important. Ainsi, de tels gicleurs se retrouvent classiquement incorporés à des butoirs rapportés sur les pare-chocs, ce qui cause des inconvénients en matière de sécurité, d'aérodynamisme et d'esthétique.

On a déjà proposé, pour palierces limitations, un porte gicleur escamotable, du type comprenant un piston télescopique apte à coulisser dans un corps creux sous la pression d'un liquide de lavage dans un sens de sortie et à être rappelé dans un sens de rentrée par un organe élastique, interposé entre ledit piston et une partie interne du corps creux, ceux-ci formant un ensemble de vérin monté fixe sur le pare-chocs du véhicule.

Il est également connu d'utiliser la force de rappel de l'organe élastique, dans une phase finale de la course de retour, pour plaquer fermement une partie formant chapeau d'un porte-gicleur, contre les surfaces avoisinantes du pare-chocs, de manière à ce que le porte-gicleur en position rentrée s'intègre au mieux, du point de vue esthétique et aérodynamique notamment, audit pare-chocs.

Cette disposition connue présente cependant un inconvénient dans le cas où le corps du dispositif, constitué pour l'essentiel par le vérin, est monté dans le pare-chocs par l'intérieur tandis que le porte-gicleur est rapporté et fixé ultérieurement, par exemple par encliquetage, sur l'extrémité libre du piston creux, par l'extérieur. En effet il est alors nécessaire pour cette opération de maintenir le piston en position au moins partiellement sortie, par exemple à l'aide des doigts, et ceci à l'encontre de la force de rappel élevée de l'organe élastique. Car si un tel maintien n'était pas réalisé, le piston reviendrait spontanément dans une position de retrait maximal qui n'autoriserait pas cette fixation.

La présente invention a pour but de remédier au problème précité.

A cet effet, elle concerne un dispositif de lavage d'une glace de projecteur de véhicule automobile, du type comprenant un vérin qui comporte une tige coulissante formant conduit pour un liquide de lavage, et capable d'être amenée dans une position sortie par la pression dudit liquide, un porte-gicleur monté sur une extrémité libre de ladite tige, et un moyen de rappel élastique de ladite tige dans une position rentrée lorsque la pression du liquide est supprimée, le vérin étant apte à être monté sur le véhicule par un premier côté d'une paroi telle que celle d'un pare-chocs, tandis que le porte-gicleur est apte à être monté sur ladite extrémité libre de la tige, traversant ladite paroi, par l'autre côté de celle-ci, la force du moyen de rappel élastique étant également utilisée pour plaquer fermement une région extérieure du porte-gicleur contre une région avoisinante de ladite paroi, caractérisé en ce que ladite tige coulissante présente dans la région de son extrémité libre un aménagement pour le montage provisoire d'un moyen de retenue qui, en coopérant avec une partie fixe, permet de maintenir la tige coulissante dans une position partiellement sortie autorisant le montage du porte-gicleur.

L'invention propose également un vérin, du type comprenant une tige coulissante formant conduit, pour un dispositif de lavage d'une glace de projecteur de véhicule automobile qui comporte, outre ledit vérin, un porte-gicleur monté à une extrémité libre de ladite tige, et un moyen de rappel élastique, ladite tige coulissante formant conduit étant destinée à acheminer un liquide de lavage sous pression vers le porte-gicleur, et étant capable d'être amenée dans une position sortie par la pression dudit liquide, tandis que le moyen de rappel élastique est capable de ramener ladite tige dans une position rentrée lorsque la pression du liquide est supprimée, le vérin étant apte à être monté sur le véhicule par un premier côté d'une paroi telle que celle d'un pare-chocs, tandis que le porte-gicleur est apte à être monté sur une extrémité libre de la tige coulissante, traversant ladite paroi, par l'autre côté de ladite paroi, la force du moyen de rappel élastique étant également utilisée pour plaquer fermement une région extérieure du porte-gicleur contre une région avoisinante de ladite paroi, vérin caractérisé en ce qu'il comprend, monté sur ladite tige un moyen de retenue de ladite tige dans une position partiellement sortie pour faciliter le montage ultérieur du porte-gicleur une fois que ledit vérin a été monté sur le véhicule.

Enfin l'invention concerne un procédé de montage d'un dispositif de lavage de glace de projecteur tel que défini plus haut, caractérisé par les étapes suivantes :
- extraction partielle de la tige pour dégager l'aménagement pour le montage provisoire d'un moyen de retenue,
- mise en place sur la tige du moyen de retenue, en coopération avec ledit aménagement,
- montage du vérin sur le véhicule par ledit premier côté de la paroi,
- montage du porte-gicleur sur l'extrémité libre de la tige coulissante, par ledit autre côté de la paroi ,
- extraction partielle de la tige pour dégager le moyen de retenue,
- enlèvement du moyen de retenue,

après quoi ladite région extérieure (3a) du porte-gicleur peut venir se plaquer fermement sur la région avoisinante de ladite paroi sous l'action de la force exercée par le moyen de rappel élastique.

L'invention sera mieux comprise et d'autres caractéristiques de celle-ci seront mises en évidence à l'aide de la description qui suit, en référence aux dessins schématiques annexés, illustrant, à titre d'exemple non limitatif, comment l'invention peut être réalisée et sur lesquels :
- la figure 1 est une vue d'ensemble schématique, en coupe axiale partielle, d'un dispositif de lave-glace selon l'invention;
- la figure 2 est une vue en coupe axiale partielle, d'une partie formant vérin du dispositif de la figure 1;
- la figure 3 est une vue en coupe axiale longitudinale du piston du vérin de la figure 2;
- la figure 4 est une vue latérale de l'extrémité du piston de la figure 3;
- la figure 5 est une vue en coupe transversale selon la ligne V-V de la figure 4;
- la figure 6 est une vue en coupe d'une partie d'un dispositif selon une variante de réalisation;
- la figure 7 est une vue en plan d'une pièce appartenant à la partie de la figure 6;
- la figure 8 est une vue en plan de l'intérieur d'une bague équipant le dispositif selon l'invention;
- la figure 9 est une vue en plan de l'extérieur de la bague de la figure 8; et
- la figure 10 est une vue en coupe selon la ligne X-X de la figure 9.

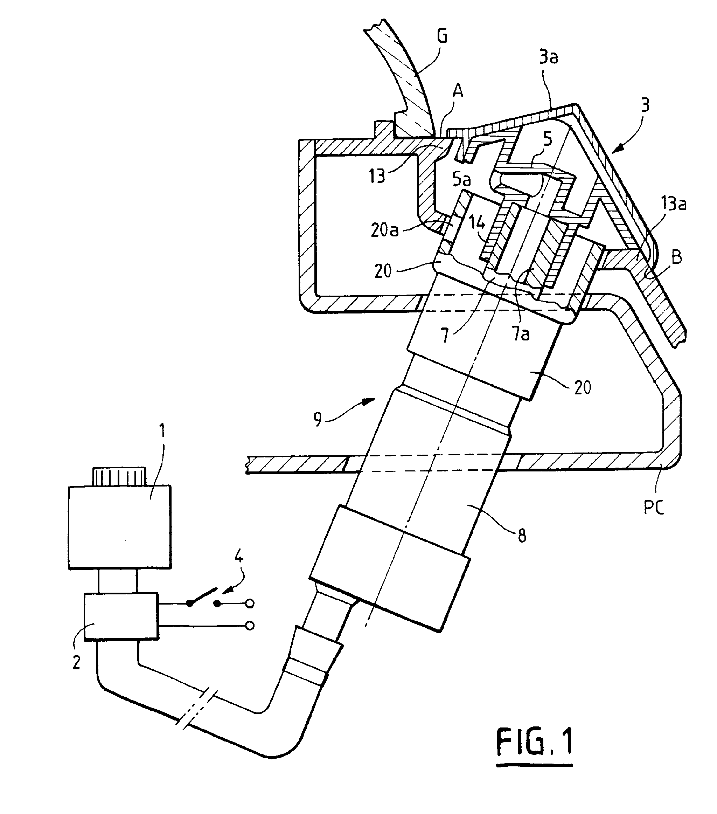

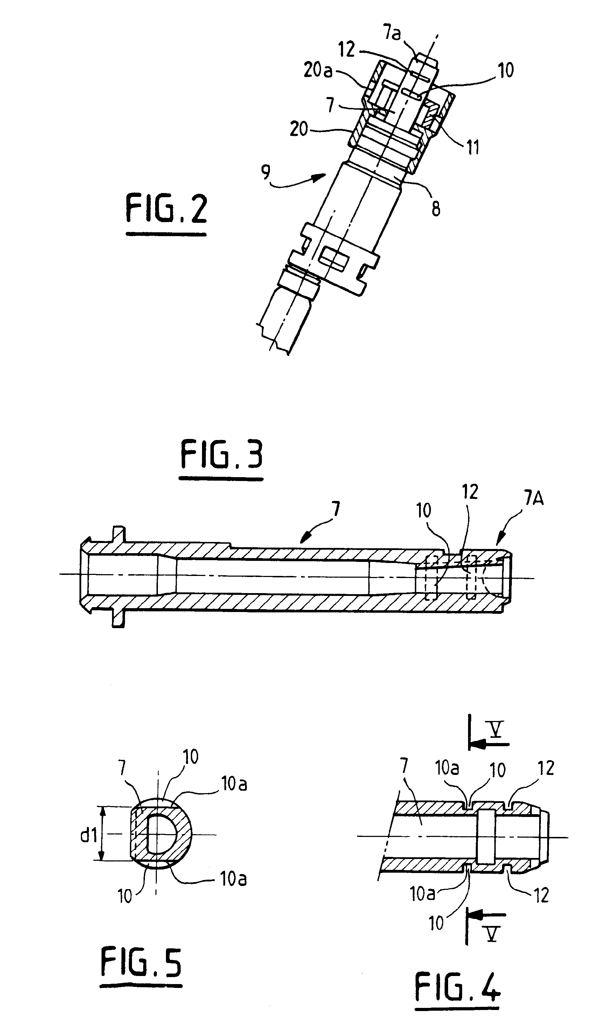

En référence tout d'abord aux figures 1 à 5, on a représenté un dispositif de lavage de la glace d'un projecteur qui comprend, de façon classique en soi, un réservoir de liquide de lavage 1, une pompe 2 reliée en amont au réservoir et en aval à un dispositif de lavage pourvu d'un porte-gicleur escamotable 3, et un interrupteur4 tel qu'un relais commandé depuis l'habitacle du véhicule pour la mise en route et l'arrêt du dispositif par l'alimentation électrique sélective de la pompe, à l'intiative du conducteur.

Le porte-gicleur escamotable est pourvu d'un gicleur 5 défini par un corps 5. Le dispositif est monté dans le présent exemple dans un pare-chocs PC du véhicule, immédiatement au-dessous de la glace G du projecteur.

Le porte-gicleur 3 est monté par le corps 5 sur
l'extrémité libre 7a d'un piston 7 en forme de tige creuse, apte à coulisser dans un corps creux 8. Le piston 7 est apte à être amené dans une position sortie, sous l'action de la pression du liquide de lavage, et à être rappelé dans une position rentrée lorsque ladite pression est supprimée, à l'aide d'un organe élastique de rappel tel qu'un ressort (non représenté), situé à l'intérieur du corps creux 8 et agissant entre ce dernier et le piston 7. Les éléments 7 et 8 forment un vérin, monté fixe sur le pare-chocs du véhicule comme on va le voir ci-dessous.

Le vérin est destiné à être monté par l'intérieur du pare-chocs PC, tandis que le porte-gicleur 3 est destiné, seulement ensuite, à être monté sur l'extrémité du piston à partir de l'extérieur du pare-chocs.

A cet effet, selon la présente invention, la région d'extrémité libre 7a du piston 7 comporte un aménagement 10 destiné à au montage provisoire sur ladite tige d'une bague amovible 11 formant cale, qui est apte à s'appuyer sur la partie adjacente du corps de vérin 8 pour maintenir la tige en position partiellement sortie, de manière à laisser émerger dans une mesure suffisante ladite extrémité libre de la tige pour que des moyens de montage du porte-gicleur 3 sur ladite extrémité puissent être mis en oeuvre.

Dans le présent exemple, ces moyens de montage comprennent sur la tige 7 des aménagements 12 situés entre l'aménagement 10 précité et la partie terminale de la tige. Lorsque la bague 11 est retirée, le ressort de rappel est capable de ramener la tige 7 dans une position complètement rentrée, pour que les bords d'une partie formant capot 3a du porte-gicleur 3 (points A et B sur la figure 1) soient fermement appliqués contre des régions adjacentes 13, 13a de la surface externe du pare-chocs PC.

Selon un exemple de réalisation, l'aménagement 10 réalisé sur le piston 7 pour le montage amovible de la bague 11 comprend deux encoches latérales 10 dont l'orientation est essentiellement transversale à l'axe du piston, pour une mise en place et un enlèvement de la bague selon cette direction transversale.

Les deux encoches 10 comportent des fonds plats 10a parallèles entre eux et aptes à coopérer avec la bague 11 comme il sera décrit plus avant.

Selon un premier mode de réalisation, le corps 5 du porte-gicleur 3 comprend une partie intérieure en forme de manchon 14 coopérant avec l'extrémité libre correspondante 7a du piston 7 qu'elle coiffe et sur laquelle elle est maintenue par l'intermédiaire de moyens d'encliquetage élastiques (nonvisibles), qui coopèrent avec une paire de secondes encoches 12, parallèles aux encoches 10, qui constituent les aménagements précités des moyens de montage du porte-gicleur. Ces encoches 12 sont formées latéralement sur la région d'extrémité 7a du piston 7, entre les encoches 10 et la face terminale dudit piston.

Les moyens de fixation encliquetables du porte-gicleur 3 peuvent être constitués par des nervures ou protubérances ménagées à l'intérieur de la partie formant manchon 14 et destinées à s'engager dans les encoches 12 du piston 7, après un mouvement de positionnement du porte-gicleur selon l'axe du piston. L'extrémité libre biseautée du piston 7 tient lieu de rampe pour l'écartement élastique temporaire des nervures 15.

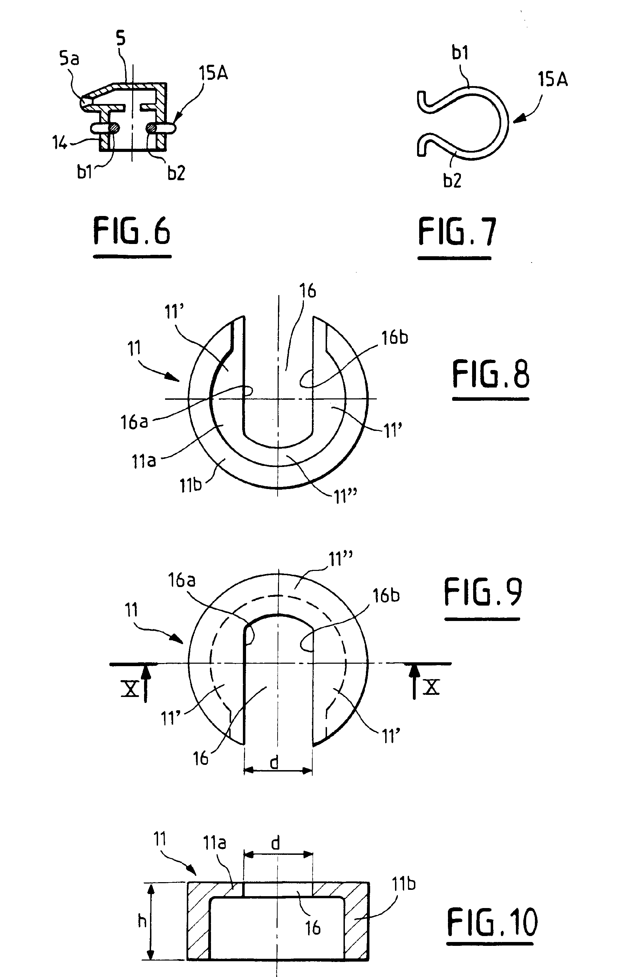

Selon une variante de réalisation représentée sur les figures 6 et 7, les moyens de fixation encliquetables du porte-gicleur 3A sont constitués par un ressort 15A en forme générale de lyre, monté sur le corps 5 et dont les branches b1 et b2 sont aptes à s'engager dans les encoches 12 du piston 7, de la même manière que les nervures précitées.

De préférence, un joint d'étanchéité (non représenté) est interposé entre le piston 7 et le manchon 14 du corps 5.

Bien entendu, il peut être également prévu que le montage du porte-gicleur sur le piston puisse s'effectuer selon une direction perpendiculaire à l'axe du piston.

En référence maintenant aux figures 8 à 10, la bague 11 est constituée par un organe de contour généralement circulaire avec une base 11 a et une collerette périphérique 11 b. Elle comporte deux branches 11' reliées par une partie de liaison 11" et définissant entre elles une lumière oblongue radiale 16 pratiquée dans la base et dont les bords parallèles en vis-à-vis 16a, 16b sont aptes à pénétrer dans les encoches 10 du piston, lors d'une mise en place perpendiculairement à l'axe de celui-ci, pour venir s'appliquer contre leurs fonds 11.

Les branches 11' de la bague 11 sont espacées d'une distance d égale, au jeu près, à la distance d1 séparant les fonds 10a des encoches 10 (voir figure 5).

La bague est mise en place de telle sorte que sa partie concave soit tournée vers le corps de vérin 8.

Un manchon 20 est par ailleurs prévu pour abriter la bague 11 et le manchon 14 du corps 5. Ce manchon 20 est fixé au corps 8 du vérin à son extrémité côté piston 7. Il présente de préférence une fenêtre latérale 20a permettant de déterminer visuellement la présence ou l'absence de la bague 11.

Le montage du dispositif de lavage décrit ci-dessus est le suivant:
- extraction partielle du piston 7, pour dégager les encoches 10 du manchon 20;
- mise en place de la bague de calage amovible 11 sur le piston 7;
- positionnement du vérin dans le pare-chocs PC par l'intérieur de celui-ci, le piston 7 étant maintenu partiellement sorti par la bague 11;
- fixation du vérin sur le pare-chocs par tout moyen approprié;
- mise en place et fixation du porte-gicleur 3, à l'aide du manchon 14 appartenant au corps 5, sur le piston 7, axialement ou latéralement;
- extraction partielle du piston 7, pour dégager la bague 11 du manchon 20; et
- enlèvement latéral de la bague 11, après quoi la force de rappel du ressort associé au vérin plaque fermement le capot du porte-gicleur 3 contre les parois avoisinantes du pare-chocs PC.

Le montage du dispositif étant terminé, celui-ci fonctionne comme suit : lorsque la pompe 2 n'est pas alimentée en électricité, aucune pression de liquide de lavage n'est appliquée au dispositif, le piston 7 et le porte-gicleur 3 occupent alors la position escamotée représentée sur la figure 1, dans laquelle le capot du porte-gicleur est fermement appliqué, périphéri- quement, contre la paroi avoisinante du pare-chocs. Lorsque la pompe 2 est alimentée et que le liquide de lavage sous pression est appliqué au vérin, le piston 7 et le porte-gicleur 3 sont amenés en position déployée et le gicleur 5 est alimenté avec le liquide de lavage, pour effectuer une aspersion de la glace à partir d'une position située bien au-devant de celle-ci.

On observera ici que l'épaisseur e de la partie de base 11a de la bague, ainsi que la largeur des encoches associées 10 du piston, ont de préférence une valeur supérieure à la largeur des encoches 12 destinées au montage du porte-gicleur. De la sorte, on évite que la bague 11 soit positionnée par inadvertance dans les encoches 12. On notera également que la partie 11" de la bague 11 peut être utilisée comme partie de préhension pour l'enlèvement de ladite bague.

Parailleurs, selon une variante, une ouverture de section plus grande que la bague peut être formée latéralement dans le manchon 20 pour permettre l'extraction de la bague 11 par cette ouverture pratiquement sans avoir à effectuer une extraction du piston 7.

## Revendications

1. Dispositif de lavage d'une glace de projecteur de véhicule automobile, du type comprenant un vérin (7, 8) qui comporte une tige coulissante (7) formant conduit pour un liquide de lavage, et capable d'être amenée dans une position sortie par la pression dudit liquide, un porte-gicleur (3) monté sur une extrémité libre de ladite tige, et un moyen de rappel élastique de ladite tige dans une position rentrée lorsque la pression du liquide est supprimée, le vérin étant apte à être monté sur le véhicule par un premier côté d'une paroi telle que celle d'un pare-chocs (PC), tandis que le porte-gicleur est apte à être monté sur ladite extrémité libre (7a) de la tige, traversant ladite paroi, par l'autre côté de cette paroi, la force du moyen de rappel élastique étant également utilisée pour plaquer fermement une région extérieure (3a) du porte-gicleur contre une région avoisinante (13, 13a) de ladite paroi, caractérisé en ce que ladite tige coulissante présente dans la région de son extrémité libre un aménagement (10) pour le montage provisoire d'un moyen de retenue (11) qui, en coopérant avec une partie fixe (8), permet de maintenir la tige coulissante (7) dans une position partiellement sortie autorisant le montage du porte-gicleur (3).

2. Dispositif selon la revendication 1, caractérisé en ce que l'aménagement (10) réalisé sur la tige coulissante comprend au moins une encoche ayant une orientation essentiellement transversale à l'axe de ladite tige (7), pour une mise en place et un retrait du moyen de retenue (11) selon cette orientation.

3. Dispositif selon la revendication 2, caractérisé en ce que l'aménagement comprend deux encoches opposées (10), pour le montage d'un moyen de retenue comprenant deux branches opposées (11 destinées à être engagées dans lesdites encoches.

4. Dispositif selon la revendication 1, caractérisé en ce que les moyens de montage du porte-gicleur (3) sur l'extrémité libre de la tige coulissante (7) comprennent une partie intérieure creuse (14) du porte-gicleur, coiffant ladite extrémité libre, des aménagements (15a; 12) d'encliquetage élastique étant prévus respectivement sur ladite partie intérieure (14) et dans la région de ladite extrémité libre (7a).

5. Dispositif selon la revendication 4, caractérisé en ce que lesdits aménagements d'encliquetage élastique comprennent au moins une nervure ménagée dans ladite partie intérieure creuse (14) du porte-gicleur et apte à s'engager dans une encoche (12) formée dans la tige coulissante (7) lors d'une mise en place du porte-gicleur (3) selon l'axe de ladite tige.

6. Dispositif selon la revendication 5, caractérisé en ce qu'il est prévu deux nervures définies respectivement par deux branches (b1, b2) d'un ressort en forme générale de U monté sur une partie (5) du porte-gicleur définissant ladite partie intérieure creuse (14).

7. Dispositif selon l'une des revendications 1 à 6, caractérisé en ce que le vérin comprend une partie (20) entourant ladite tige au niveau de sa sortie du vérin, et en ce que ladite partie présente une fenêtre (20a) permettant de déterminer visuellement si le moyen de retenue est présent ou non.

8. Vérin (7,8), du type comprenant une tige coulissante (7) formant conduit, pour un dispositif de lavage d'une glace de projecteur de véhicule automobile qui comporte, outre ledit vérin, un porte-gicleur (3) monté à une extrémité libre de ladite tige, et un moyen de rappel élastique, ladite tige coulissante formant conduit étant destinée à acheminer un liquide de lavage sous pression vers le porte-gicleur, et étant capable d'être amenée dans une position sortie par la pression dudit liquide, tandis que le moyen de rappel élastique est capable de ramener ladite tige dans une position rentrée lorsque la pression du liquide est supprimée, le vérin étant apte à être monté sur le véhicule par un premier côté d'une paroi telle que celle d'un pare-chocs (PC), tandis que le porte-gicleur est apte à être monté sur une extrémité libre (7a) de la tige coulissante, traversant ladite paroi, par l'autre côté de ladite paroi, la force du moyen de rappel élastique étant également utilisée pour plaquer fermement une région extérieure (3a) du porte-gicleur contre une région avoisinante (13, 13a) de ladite paroi, vérin caractérisé en ce qu'il comprend, monté sur ladite tige, un moyen (11) de retenue de ladite tige dans une position partiellement sortie pour faciliter le montage ultérieur du porte-gicleur (3) une fois que ledit vérin a été monté sur le véhicule.

9. Vérin selon la revendication 8, caractérisé en ce que ledit moyen de retenue consiste en une bague fendue (11) définissant deux branches (11') qui sont engagées dans deux encoches (10) formées dans une région d'extrémité libre (7a) de la tige coulissante et ayant une orientation essentiellement transversale à l'axe de ladite tige.

10. Vérin selon la revendication 9, caractérisé en ce que les deux branches (11') de la bague sont reliées entre elles par une partie de liaison (11") constituant un moyen de préhension pour sa mise en place et son enlèvement.

11. Procédé de montage d'un dispositif de lavage de glace de projecteur selon l'une des revendications 1 à 7, caractérisé par les étapes suivantes :
- extraction partielle de la tige (7) pour dégager l'aménagement (10) pour le montage provisoire d'un moyen de retenue,
- mise en place sur la tige (7) du moyen de retenue (11), en coopération avec ledit aménagement (10),
- montage du vérin sur le véhicule par ledit premier côté de la paroi,
- montage du porte-gicleur (3) sur l'extrémité libre de la tige coulissante (7), par ledit autre côté de la paroi,
- extraction partielle de la tige (7) pour dégager le moyen de retenue,
- enlèvement du moyen de retenue (11), après quoi ladite région extérieure (3a) du porte-gicleur peut venir se plaquer fermement sur la région avoisinante (13, 13a) de ladite paroi sous l'action de la force exercée par le moyen de rappel élastique.
